# EUROPEAN PATENT APPLICATION

(11) **EP 4 462 386 A1**
(43) Date of publication of application: **13.11.2024**
(21) Application number: 24174657.7
(22) Date of filing: 07.05.2024
(51) Int. Cl.: G06V 20/64

(54) **MACHINE VISION SYSTEMS AND METHODS FOR ROBOTIC PICKING AND OTHER ENVIRONMENTS**

(30) Priority: 07.05.2023 US 202363464606 P; 06.05.2024 US 202418656172
(71) Applicant: Plus One Robotics, Inc., San Antonio, TX 78226 (US)
(72) Inventor: DEPALMA, Nicholas Brian, San Antonio, TX 78226 (US); GROLLMAN, Daniel, San Antonio, TX 78226 (US); MAJUMDAR, Abhijit, San Antonio, TX 78226 (US)
(74) Representative: Savi, Massimiliano

(57) **Abstract**

The present disclosure is for a system and a method for computer vision based object detection. The invention uses images of objects from multiple perspectives and for each image identifies planes belonging to different objects. The planes are then analyzed to determine planes belonging to the same physical object. This is accomplished by comparing characteristics of the identified planes with each other and/or expected criteria. Planes identified as belonging to the same object can be grouped and used to provide pick instructions to a robot.

## Description

### CROSS-REFERENCE TO RELATED APPLICATIONS

This application claims the benefit of U.S. Provisional Application 63/464,606, filed May 7, 2023, titled "MACHINE VISION SYSTEMS AND METHODS FOR ROBOTIC PICKING AND OTHER ENVIRONMENTS," which is herein incorporated by reference in its entirety.

### BACKGROUND

### Field of the Art

This disclosure relates to automated robotic picking systems and machine vision systems for automated robotic picking applications.

### Discussion of the State of the Art

Automated robotic picking systems often rely on a machine vision component for performing pick planning and determining how to handle various pick scenarios that arise throughout automated picking operations. In some scenarios, the vision system encounters situations where it is unable to make an automated decision and requires additional intervention. At times, a vision system can be able to make an automated decision, however, the decision can be associated with a less-than-desirable confidence level. When this occurs, if robotic picking operations continue in an automated manner, they can be associated with an increased risk of failed picks and/or picking actions that disrupt the pick scene (*e.g*., knock over pickable objects, pick more than an intended pick object, etc.).

In the realm of automated handling and packaging systems, there exists a significant challenge associated with accurately identifying and properly manipulating multipack products. These products consist of several individual items grouped together, packaged in groups, each encased in a transparent plastic wrapping for visibility. For example, some pallets of goods contain multipacks having several identical objects packaged into one package, usually with clear plastic wrap and sometimes with a cardboard half or quarter box on the bottom. The primary issue stems from the transparency of the packaging which, while beneficial for human visual identification, poses a unique set of challenges for automated systems, most notably computer vision systems for robotic picking. Top-down-based vision systems often fail on these multipacks because the plastic wrap is hard to discern, the cardboard frame is not visible from the top, and the individual objects are instead identified.

The main problem arises during the picking process, where the visual perception mechanism (e.g. computer vision systems) for automated pickers or robots misidentifies the individual items within a multipack as separate, discrete entities rather than a single unit that needs to be handled together. In other words, unlike the human eye, conventional computer vision systems may not reliably distinguish between individual items and multipacks. When a robotic arm attempts to pick a single item from within what is packaged as a group, it fails to apply the correct grip, or exert the necessary torque and may engage with the package at a non-ideal location, leading to potential product damage, inefficiencies in handling, repeated picking attempts, splitting or tearing of the multipack packaging, and disruption in the workflow due to fallen or broken items.

Historically, attempts to circumvent these issues have varied. Some solutions have included adjusting the picking strategy to approach the multipack from a side angle, which although manageable in some scenarios, introduces complexity in aligning the gripper and ensuring stability in grip during the pick process. This side-picking method often requires precise maneuvering and adjustments to account for the products' dimensions and the surrounding environment, leading to increased complexity and potential for error.

Another approach has been to develop specialized models within the vision systems that only recognize multipack configurations, essentially training the system to ignore solitary items and focus on specific groupings. This method, while effective in controlled scenarios, significantly reduces the system's flexibility and adaptability, notably in mixed-palette environments where multipack and individual items coexist. This inflexibility limits the system's application in dynamic, real-world environments where item assortments and packaging configurations frequently change.

These existing methods, while attempting to address the identification and handling challenges posed by multipack products, fall short in providing a comprehensive, flexible solution. They either lack the adaptability needed to efficiently process varied product configurations or introduce operational complexities that hinder the widespread implementation of automated picking systems. The limitations highlight the necessity for an innovative approach that can accurately identify and handle multipack products in a manner that is both efficient and adaptable to the diverse, ever-changing landscape of automated handling and packaging systems.

### SUMMARY

The present invention addresses the above problems by providing machine vision systems and methods for use in robotic picking and various other monitoring environments. The inventive machine vision systems employ two or more imaging devices, *e.g*., cameras, and/or imaging locations to identify an object to be picked and assist the proper engagement with the object to be picked by a robot. For example, two or more imaging devices can be used to image an object from two or more locations. In another example, one imaging device can be moved to two or more locations to image the object. The imaging devices are calibrated and registered to each other to calculate the relative position of each imaging device. Images captured by the cameras are independently run through a vision system to identify a shape and/or size based on the sides, faces, and/or surfaces of the object. In other embodiments, the images captured by the cameras may be run through a vision system non-independently. For example, techniques known to a person of ordinary skill in the art, including but not limited to the following may be used without departing from the scope of the invention: siamese networks that can take two images as input and generate a single response.

Once captured, each image (or a collection of images) representing a side, face, and/or surface is segmented and the segmented points are used to estimate a plane and a normal. The estimated planes and normals of each side, face, and/or surface is compared to a set of planes/normals for a set of prototype shapes to find a subset that is arranged similarly. For example, the vision system determines a set of faces that are orthonormal and share edges to match a rectangle prototype. Once a prototype shape is identified, the prototype shape can be projected onto a surface of the object at which the robot will engage the object. Then, the corresponding mask is returned to a controller of the robot to guide a pick operation. If the vision system cannot find a shape with high enough confidence, it can ask a human for assistance.

The invention pertains to an innovative method and system for accurately identifying and handling multipack products using a combination of vision-guided systems in automated picking processes. Specifically, the invention incorporates the use of multiple cameras positioned at different angles to capture various perspectives of the multipack products. As mentioned above, these products are often characterized by their transparent wrapping that encases multiple individual items, making it challenging for standard vision-guided systems to accurately discern them as a single unit for picking purposes.

The core of the solution lies in the integration and analysis of visual data obtained from multiple perspectives (e.g. top and side perspectives) of the multipack products. Where traditional systems falter in distinguishing the collective unit due to the transparent nature of the packaging, this invention skillfully merges detections from different viewpoints. By identifying shared edges or matching the captured images to a set of pre-defined canonical shapes, such as rectangles or other geometrical forms, it effectively recognizes the multipacks as singular entities. This capability to discern the precise boundaries and collective nature of multipack items directly addresses the issue of incorrect picking attempts that could lead to product damage and operational inefficiencies.

Moreover, this invention surpasses conventional approaches by not only applying a multi-camera setup but also by processing the detection data in a unique manner. It does not merely fuse sensor data at an early stage; instead, it independently processes detections from each camera view, applying a sophisticated approach to combine these insights post-detection. This methodology ensures higher accuracy in object identification and significantly reduces the likelihood of picking errors related to misidentification or incorrect grip placement.

As described above, the images from different perspectives can be processed independently (e.g. in parallel) and then the resulting features of the computed planes are compared in order to identify objects. In particular, while one view (e.g. a top view) may see individual objects which are part of a multipack, a second view (e.g. a side view) may identify that those same objects are actually part of a multipack. As opposed to relying solely on a single view which may lead to erroneous picks, the second view improves the ability of computer vision systems to properly or more confidently identify objects such as multipacks. Ultimately, through improved object recognition pick efficiency can be improved while avoiding object damage associated with conventional approaches.

Moreover, this approach provides an improvement in computational efficiency compared to other techniques. For example, an alternative approach to the above could be to acquire two image data sets, but fuse the two image data sets into a 3D point cloud and process the point cloud as a whole to attempt to distinguish objects. While this may yield successful results, it is computationally burdensome as 3D point cloud processing can require additional processing that is not required by the plane based analysis described herein. The inventive approach disclosed herein addresses these limitations by independently processing the images and determining objects based on plane characteristics which is more computationally efficient than repeatedly processing large 3D point clouds as a whole.

Additionally, the system enriches the picking process by providing more accurate information regarding the object's dimensions, including depth, thus enabling optimized gripper positioning and movement. For example, single camera/perspective systems are inherently limited in the information which can be derived about an object. This multi-camera/perspective approach provides additional object information, such as additional dimensions, which can improve picking configurations. This results in a more efficient picking operation with reduced risk of errors and enhanced adaptability to various product configurations and packaging types. In contrast to existing solutions that may require specific models for different item categories or suffer from limitations in flexibility and adaptability, this invention offers a versatile approach that improves operational efficiency and accuracy in the automated handling of multipack products.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
**FIGS. 1A** and **1B** illustrate an exemplary system for robot picking environment in accordance with an exemplary embodiment of the invention.
**FIG. 2** illustrates an exemplary vision system for use in observational support in accordance with an exemplary embodiment of the present invention.
**FIG. 3A** and **3B** illustrate an exemplary process for providing observational support according to one embodiment of the invention.
**FIG. 4** illustrates one embodiment of the computing architecture that supports an embodiment of the inventive disclosure.
**FIG. 5** illustrates components of a system architecture that supports an embodiment of the inventive disclosure.
**FIG. 6** illustrates components of a computing device that supports an embodiment of the inventive disclosure.
**FIG. 7** illustrates components of a computing device that supports an embodiment of the inventive disclosure.

### DETAILED DESCRIPTION

One or more different embodiments may be described in the present application. Further, for one or more of the embodiments described herein, numerous alternative arrangements may be described; it should be appreciated that these are presented for illustrative purposes only and are not limiting of the embodiments contained herein or the claims presented herein in any way. One or more of the arrangements may be widely applicable to numerous embodiments, as may be readily apparent from the disclosure. In general, arrangements are described in sufficient detail to enable those skilled in the art to practice one or more of the embodiments, and it should be appreciated that other arrangements may be utilized and that structural, logical, software, electrical and other changes may be made without departing from the scope of the embodiments. Particular features of one or more of the embodiments described herein may be described with reference to one or more particular embodiments or figures that form a part of the present disclosure, and in which are shown, by way of illustration, specific arrangements of one or more of the aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements.

Headings of sections provided in this patent application and the title of this patent application are for convenience only and are not to be taken as limiting the disclosure in any way.

Devices that are in communication with each other need not be in continuous communication with each other, unless expressly specified otherwise. In addition, devices that are in communication with each other may communicate directly or indirectly through one or more communication means or intermediaries, logical or physical.

A description of an aspect with several components in communication with each other does not imply that all such components are required. To the contrary, a variety of optional components may be described to illustrate a wide variety of possible embodiments and in order to more fully illustrate one or more embodiments. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they may only occur once each time a process, method, or algorithm is carried out or executed. Some steps may be omitted in some embodiments or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions may be executed out of order from that shown or discussed, including substantially concurrently or in reverse order, depending on the functionality involved, as would be understood by those having ordinary skill in the art.

The detailed description set forth herein in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

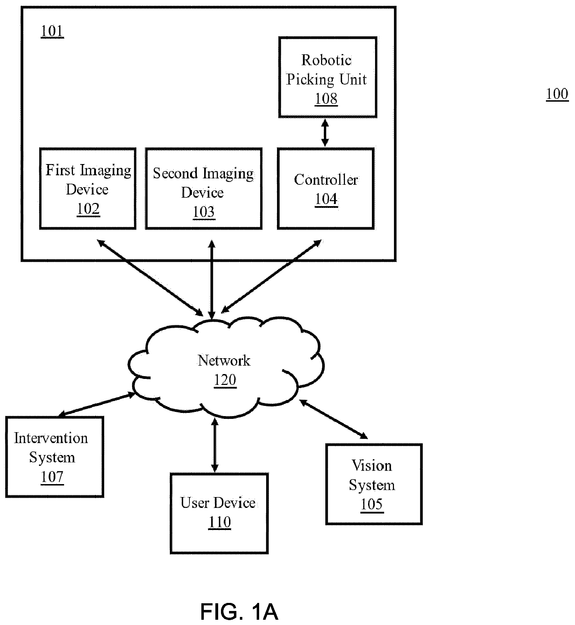

**FIG. 1A** illustrates an exemplary embodiment of a system for robot picking environment 100 according to one embodiment. The robot picking environment 100 includes a pick cell 101 that includes a first imaging device 102, a second imaging device 103, a controller, and a robotic picking unit 108. The robot picking environment 100 also includes a vision system 105, an intervention system 107, and one or more user device(s). The components of the robot picking environment 100 can communicate via a network 120 over which the various systems communicate and interact. The various computing devices described herein are exemplary and for illustration purposes only. The system can be reorganized or consolidated, as understood by a person of ordinary skill in the art, to include more or fewer components and/or to perform the same tasks on one or more other servers or computing devices without departing from the scope of the invention.

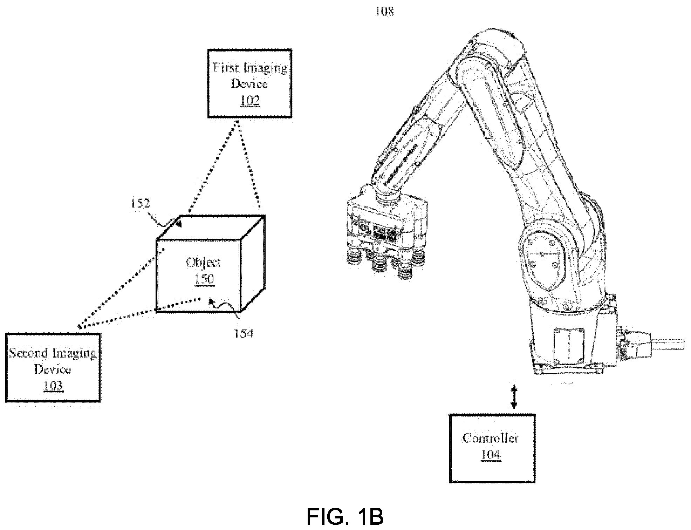

The pick cell 101 generally represents a robotic picking environment where robotic picking operations are performed to pick and/or move objects from one location to another. The exemplary pick cell 101 includes the robotic picking unit 108, the controller 104, the first imaging device 102, and the second imaging device 103. The pick cell 101 can be associated with automated or semi-automated robotic picking operations. The robotic picking unit 108 of the pick cell 101 can comprise at least one of a robotic arm and an end effector for picking and/or moving objects within the pick cell 101 (as illustrated in FIG. 1B), such as from a first (*e.g.* pick) location to a second (*e.g.* placement) location. The controller 104 generally includes computing architecture (hardware and/or software) configured to control the robotic picking unit 108. In one aspect, the controller 104 can relay pick instructions. In one aspect, the controller 104 can convert pick information (*e.g*. pick coordinates, pick points) into pick instructions actionable by the robotic picking unit 108.

The first imaging device 102 can be any type of camera or sensor that captures a two-dimensional (2D) image data of one or more faces, sides, and/or surfaces of the object of interest, and/or RGBD data for plane extraction and prototype fitting. The second imaging device 103 can be any type of camera or sensor that captures a two-dimensional (2D) image of one or more faces, sides, and/or surfaces of the object of interest and/or surfaces of the object of interest, and/or RGBD data for plane extraction and prototype fitting.

As further illustrated in **FIG. 1B****,** the first imaging device 102 obtains a first image and the second image device obtains a second image of an object 150 that is picked by the robot picking unit 108. For example, the first imaging device 102 obtains one or more images of a first face, side and/or surface 152 of the object 150. The second imaging device 103 obtains one or more images of a second face, side and/or surface 154 of the object 150. The one or more images are then provided to the vision system 105.

In embodiments, the vision system 105 utilizes the one or more images to identify the shape, type, and/or size of the object 150. This allows the vision system to provide a mask or map that is utilized by the robot picking unit 108 to engage with a face, side and/or surface of the object 150. The vision system 105 segments each image, captured by the first imaging device 102 and the second imaging device 103, representing a side, face, and/or surface. The vision system 105 then utilizes the segmented points to estimate a plane and a normal for the first face, side and/or surface 152 and the second face, side and/or surface 154 of the object 150. The estimated planes and normals of the first face, side and/or surface 152 and the estimated planes and normals of the second face, side and/or surface 154 are compared to a set of planes/normals for a set of prototype shapes to find a subset that are arranged similarly. For example, the vision system 105 determines a set of faces that are orthonormal and share edges to match a rectangle prototype. Once a prototype shape is identified, the vision system 105 can provide the prototype shape to the controller 104 (or other component) and projected onto a surface of the object 150 (*e.g*., the first face, side and/or surface 152) at which the robot picking unit 108 can engage the object. Then, the corresponding mask can be returned to the controller 104 of robot picking unit 108 to provide guidance in a pick operation for the object 150.

If the vision system cannot find a shape with high enough confidence, the vision system 105 alerts the intervention system 107 and/or one or more user devices 110. For example, a user (*e.g*., human-in-the-loop crew chief) can provide assistance in identifying the object 150 via the intervention system 107 and/or one or more user devices 110. For example, a user can review all images and return a boundary of the object 150 (e.g., multipack) from the first image device 102, *e.g*., top camera. In another example, a user can review all images and select faces, sides and/or surfaces to provide them as representing the missing features, and select prototype shape that fits them. In another example, the user can review the images and create a new prototype shape that matches the images. The user-provided prototypes can be stored for later use. As such, while the vision system 105 may start with generic prototypes, *e.g*., rectangular shapes of fixed length, specific shapes can be learned from experience as the system operates, and used to generate better predictions.

Although described herein with respect to a robotic picking system, the inventive concepts disclosed herein can be adapted for and/or applied to other environments other than robotic picking operations as would be apparent to one of ordinary skill in the art. For example, instead of observing and providing feedback in association with a pick cell 101, the invention can be adapted to a multitude of environments including, but not limited to, security systems/monitoring and/or threat detection, traffic monitoring, surveillance, loading dock/bay occupation status monitoring, item identification, classification and/or categorization, item sorting applications, etc.

Additionally, while FIGS. 1A and 1B illustrate two imaging devices, the environment 100 can include one imaging device that can move to multiple locations to capture the faces, sides and surfaces of the object. Likewise, the environment 100 can include more than two imaging devices.

While the above has been described as containing "imaging devices," these devices can include any type of sensor including, but not limited to, image capture sensors/cameras, video sensors/cameras, depth sensors, audio sensors (*e.g*. microphone), infrared sensors, thermal sensors, vibration/seismic sensors, x-ray sensors, millimeter wave scanners and other electromagnetic radiation sensors/scanners, *etc.* The sensor can be modular and configurable such that individual sensors of any type can be added to or removed from the sensor module as desired or as appropriate for a given application/environment. Depending on the particular application, information from at least one sensor can be used to trigger a query. The query can be processed to determine what additional data is needed (e.g. data from at least one of first and second sensor modules). The query and any corresponding data can be processed to provide an appropriate response which can include an intervention response from a remote intervention system (*e.g*., intervention system 107).

The user device(s) 110 include, generally, a computer or computing device including functionality for communicating (*e.g*., remotely) over the network 120. Data can be collected from user devices 110, and data requests can be initiated from each user device 110. User device(s) 110 can be a server, a desktop computer, a laptop computer, personal digital assistant (PDA), an in- or out-of-car navigation system, a smart phone or other cellular or mobile phone, or mobile gaming device, among other suitable computing devices. User devices 110 can execute one or more applications, such as a web browser (e.g., Microsoft Windows Internet Explorer, Mozilla Firefox, Apple Safari, Google Chrome, and Opera, etc.), or a dedicated application to submit user data, or to make prediction queries over a network 120.

In particular embodiments, each user device 110 can be an electronic device including hardware, software, or embedded logic components or a combination of two or more such components and capable of carrying out the appropriate functions implemented or supported by the user device 110. For example and without limitation, a user device 110 can be a desktop computer system, a notebook computer system, a netbook computer system, a handheld electronic device, or a mobile telephone. The present disclosure contemplates any user device 110. A user device 110 can enable a network user at the user device 110 to access network 120. A user device 110 can enable its user to communicate with other users at other user devices 110.

The user device 110 can have a web browser, such as MICROSOFT INTERNET EXPLORER, GOOGLE CHROME or MOZILLA FIREFOX, and can have one or more add-ons, plug-ins, or other extensions, such as TOOLBAR or YAHOO TOOLBAR. A user device 110 can enable a user to enter a Uniform Resource Locator (URL) or other address directing the web browser to a server, and the web browser can generate a Hyper Text Transfer Protocol (HTTP) request and communicate the HTTP request to server. The server can accept the HTTP request and communicate to the user device 110 one or more Hyper Text Markup Language (HTML) files responsive to the HTTP request. The user device 110 can render a web page based on the HTML files from server for presentation to the user. The present disclosure contemplates any suitable web page files. As an example and not by way of limitation, web pages can render from HTML files, Extensible Hyper Text Markup Language (XHTML) files, or Extensible Markup Language (XML) files, according to particular needs. Such pages can also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a web page encompasses one or more corresponding web page files (which a browser can use to render the web page) and vice versa, where appropriate.

The user device 110 can also include an application that is loaded onto the user device 110. The application obtains data from the network 120 and displays it to the user within the application interface.

Exemplary user devices are illustrated in some of the subsequent figures provided herein. This disclosure contemplates any suitable number of user devices, including computing systems taking any suitable physical form. As example and not by way of limitation, computing systems can be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, or a combination of two or more of these. Where appropriate, the computing system can include one or more computer systems; be unitary or distributed; span multiple locations; span multiple machines; or reside in a cloud, which can include one or more cloud components in one or more networks. Where appropriate, one or more computing systems can perform without substantial spatial or temporal limitation one or more steps of one or more methods described or illustrated herein. As an example, and not by way of limitation, one or more computing systems can perform in real-time or in batch mode one or more steps of one or more methods described or illustrated herein. One or more computing systems can perform at different times or at different locations one or more steps of one or more methods described or illustrated herein, where appropriate.

Network cloud 120 generally represents a network or collection of networks (such as the Internet or a corporate intranet, or a combination of both) over which the various components illustrated in **FIG. 1A** (including other components that can be necessary to execute the system described herein, as would be readily understood to a person of ordinary skill in the art). In particular embodiments, network 120 is an intranet, an extranet, a virtual private network (VPN), a local area network (LAN), a wireless LAN (WLAN), a wide area network (WAN), a metropolitan area network (MAN), a portion of the Internet, or another network 120 or a combination of two or more such networks 120. One or more links connect the systems and databases described herein to the network 120. In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable network 120, and any suitable link for connecting the various systems and databases described herein.

The network 120 connects the various systems and computing devices described or referenced herein. In particular embodiments, network 120 is an intranet, an extranet, a virtual private network (VPN), a local area network (LAN), a wireless LAN (WLAN), a wide area network (WAN), a metropolitan area network (MAN), a portion of the Internet, or another network 421 or a combination of two or more such networks 120. The present disclosure contemplates any suitable network 120.

One or more links couple one or more systems, engines or devices to the network 120. In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable links coupling one or more systems, engines or devices to the network 120.

In particular embodiments, each system or engine can be a unitary server or can be a distributed server spanning multiple computers or multiple datacenters. Systems, engines, or modules can be of various types, such as, for example and without limitation, web server, news server, mail server, message server, advertising server, file server, application server, exchange server, database server, or proxy server. In particular embodiments, each system, engine or module can include hardware, software, or embedded logic components or a combination of two or more such components for carrying out the appropriate functionalities implemented or supported by their respective servers. For example, a web server is generally capable of hosting websites containing web pages or particular elements of web pages. More specifically, a web server can host HTML files or other file types, or can dynamically create or constitute files upon a request, and communicate them to client/user devices or other devices in response to HTTP or other requests from client devices or other devices. A mail server is generally capable of providing electronic mail services to various client devices or other devices. A database server is generally capable of providing an interface for managing data stored in one or more data stores.

In particular embodiments, one or more data storages can be communicatively linked to one or more servers via one or more links. In particular embodiments, data storages can be used to store various types of information. In particular embodiments, the information stored in data storages can be organized according to specific data structures. In particular embodiment, each data storage can be a relational database. Particular embodiments can provide interfaces that enable servers or clients to manage, e.g., retrieve, modify, add, or delete, the information stored in data storage.

The system can also contain other subsystems and databases, which are not illustrated in FIGS. 1A and 1B, but would be readily apparent to a person of ordinary skill in the art. For example, the system can include databases for storing data, storing features, storing outcomes (training sets), and storing models. Other databases and systems can be added or subtracted, as would be readily understood by a person of ordinary skill in the art, without departing from the scope of the invention.

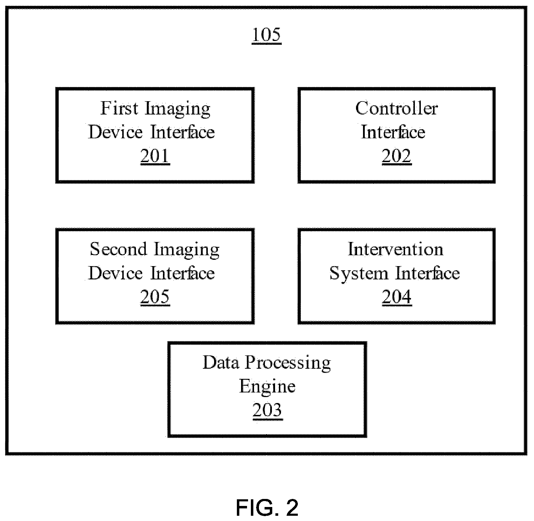

**FIG. 2** illustrates an exemplary embodiment of the vision system 105 for use in observational support in robotic picking applications. The exemplary vision system 105 includes a first imaging device interface 201, a controller interface 202, a data processing engine 203, an intervention system interface 204, and a second imaging device interface 205. The various computing devices described herein are exemplary and for illustration purposes only. The system can be reorganized or consolidated, as understood by a person of ordinary skill in the art, to include more or fewer components and/or to perform the same tasks on one or more other servers or computing devices without departing from the scope of the invention.

The first imaging device interface 201 obtains data from an imaging device such as first imaging device 102. The first imaging device interface 201 can obtain data through an application programming interface (API). The first imaging device interface 201 can obtain data in response to an internal or external trigger. The second imaging device interface 205 obtains data from an imaging device such as second imaging device 103. The second imaging device interface 205 can obtain data through an application programming interface (API). The second imaging device interface 205 can obtain data in response to an internal or external trigger.

The controller interface 202 is operable to communication with a controller (*e.g*., controller 104) associated with a robotic picking system or unit. The controller interface 202 can obtain an instruction from a controller to obtain and process data from the imaging devices. The controller interface 202 can provide at least one of pick information and pick instructions to a controller, as described herein.

The data processing engine 203 obtains the images from the image devices and user input. The data processing engine 203 utilizes the one or more images to identify the shape, type, and/or size of the object 150. The data processing engine 203 segments each image, captured by the first imaging device 102 and the second imaging device 103, representing a side, face, and/or surface. The data processing engine 203 then utilizes the segmented points to estimate a plane and a normal for the first face, side and/or surface 152 and the second face, side and/or surface 154 of the object 150. The estimated planes and normals of the first face, side and/or surface 152 and the estimated planes and normals of the second face, side and/or surface 154 are compared to a set of planes/normals for a set of prototype shapes to find a subset that are arranged similarly. For example, the data processing engine 203 determines a set of faces that are orthonormal and share edges to match a rectangle prototype.

Once a prototype shape is identified, the vision system 105 can provide the prototype shape to the controller 104, via the controller interface 202 (or other component) and projected onto a surface of the object 150 (*e.g*., the first face, side and/or surface 152) at which the robot picking unit 108 can engage the object.

The intervention system interface 204 is operable to communicate with an intervention system, such as intervention system 107. The intervention system interface 204 can provide at least one of sensor module data, data processing result data, and grading information to the intervention system. Intervention system interface 204 can obtain intervention response data wherein the response data includes at least one of information to assist second vision system 106 with determining pick information and/or pick instructions and information to be provided to controller 104 for controlling robotic picking operations.

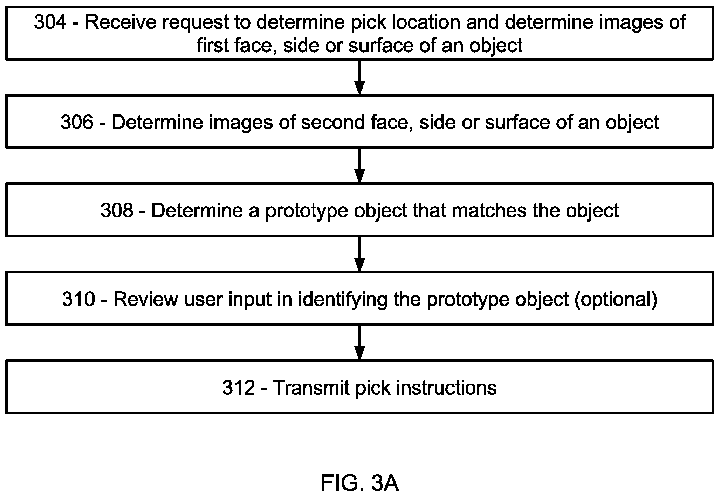

**FIG. 3A** illustrates an exemplary process for determining an object pick location. The process steps described herein can be performed in association with a system such as that described in FIGS. 1A and 1B and/or FIG. 2 above or in association with a different system. The steps can be reordered or consolidated, without departing from the scope of the invention, as would be apparent to one of ordinary skill in the art. Furthermore, any of the listed steps can be optional depending on the particular application of the inventive concept as would be apparent to one of ordinary skill in the art.

At step 304, the process includes receiving a request to identify a pick location of an object. For example, the object 150 can need to be moved by the robot picking unit 108. The controller 104 can send a request to the vision system 105 to identify a pick location on the object 150. Additionally, at step 304, images are determined for a first face, side, or surface of the object. For example, the controller 104 and/or the vision system 105 can instruct the first imaging device 102 to obtain images of the first face, side and/or surface 152 of the object 150.

At step 306, images are determined for a second face, side, or surface of the object. For example, the controller 104 and/or the vision system 105 can instruct the second imaging device 103 to obtain images of the second face, side and/or surface 154 of the object 150.

At step 308, a prototype object that matches the object is determined. For example, the vision system 105 utilizes the one or more images to identify the shape, type, and/or size of the object 150. The vision system 105 segments each image, captured by the first imaging device 102 and the second imaging device 103, representing a side, face, and/or surface. The vision system 105 then utilizes the segmented points to estimate a plane and a normal for the first face, side and/or surface 152 and the second face, side and/or surface 154 of the object 150. The estimated planes and normals of the first face, side and/or surface 152 and the estimated planes and normals of the second face, side and/or surface 154 are compared to a set of planes/normals for a set of prototype shapes to find a subset that are arranged similarly. For example, the vision system 105 determines a set of faces that are orthonormal and share edges to match a rectangle prototype.

At step 310, user input may be optionally received in identifying the prototype object. For example, if a prototype can not be determined, the vision system 105 alerts the intervention system 107 and/or one or more user devices 110. For example, a user (*e.g*., human-in-the-loop crew chief) can provide assistance in identifying the object 150 via the intervention system 107 and/or one or more user devices 110. For example, a user can review all images and return a boundary of the object 150 (e.g., multipack) from the first image device 102, *e.g*., top camera. In another example, a user can review all images and select faces, sides and/or surfaces to provide them as representing the missing features, and select prototype shape that fits them. In another example, the user can review the images and create a new prototype shape that matches the images. The user-provided prototypes can be stored for later use. As such, while the vision system 105 may start with generic prototypes, *e.g*., rectangular shapes of fixed length, specific shapes can be learned from experience as the system operates, and used to generate better predictions.

At step 312, pick instructions can be transmitted. For example, the vision system 105 can provide the prototype shape to the controller 104, via the controller interface 202 (or other component) and projected onto a surface of the object 150 (*e.g*., the first face, side and/or surface 152) at which the robot picking unit 108 can engage the object.

Although described herein as a process for providing instructions to a controller associated with robotic picking operations, the process can be adapted for other observational applications where the particular data obtained and processed and the response provided would be consistent with the needs of the given application as would be apparent to one of ordinary skill in the art. For example, in non-robotic picking applications, it would not be necessary to provide pick instructions, but instead to provide application appropriate feedback sufficient to satisfy the application specific query.

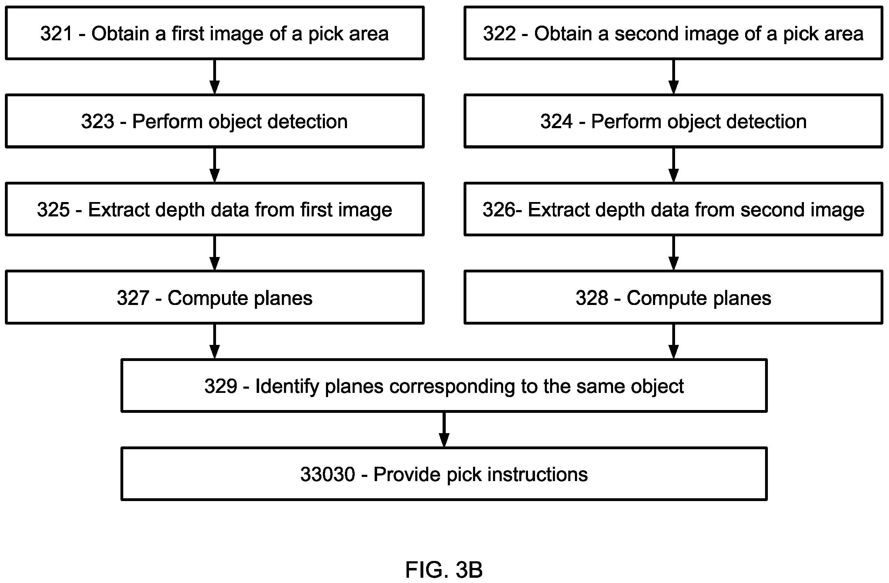

**FIG. 3B** illustrates an exemplary process for improving computer vision based object identification according to one embodiment of the invention. The process comprises obtaining first and second images of a pick area 321 and 322, performing edge detection 323 and 324, extracting depth data 325 and 326, computing planes 327 and 328, identifying corresponding planes 329, providing pick instructions 330. The process steps described herein may be performed in association with a system such as that described in FIG. 1 and/or FIG. 2 above or in association with a different system. The process may comprise additional steps, fewer steps, and/or a different order of steps without departing from the scope of the invention as would be apparent to one of ordinary skill in the art. For example, although the acquisition and processing of first and second images is depicted as occurring in parallel, the steps may be combined into a serial format without departing from the scope of the invention as would be apparent to one of ordinary skill in the art.

At 321 and 322, the process comprises obtaining a first and second images of a pick area. The pick area may be associated with a robotic picking unit, such as a robotic arm. The first image may be obtained from a first camera and the second image obtained from a second camera. The first and second cameras may be positioned such that they capture images of the pick area from different perspectives. The images may comprise two dimensional (2D) data and three dimensional (3D) data. The cameras may comprise RGB-D cameras or other suitable cameras for providing 2D and 3D data. The first and second images may be obtained sequentially. The first and second images may be obtained at substantially the same time. The first and second images may be obtained simultaneously. In one aspect, the first camera is positioned such that the image from the first camera comprises a top-down (or vertical) view of the pick objects within the pick area and the second camera is positioned such that the image from the second camera comprises a side (or horizontal) view of the pick objects within the pick area. In one aspect, the cameras may be positioned such that the images capture at least one of the top and side of objects within the pick area. In one aspect, more than two cameras may be used to capture additional images from different perspectives which may be processed in the same manner as discussed below. In one aspect, a single camera may be used but moved to different locations to capture images of the pick area from different perspectives. Ultimately, any number of cameras may be used for capturing images of the pick area as would be apparent to one of ordinary skill in the art.

At 323 and 324, the process comprises performing object detection. Performing object detection may comprise processing each image by executing an object detection algorithm to generate a pixel mask for each image. The pixel mask may indicate the pixels associated with at least one object detected by the object detection algorithm. The pixel mask may indicate the pixels associated with each of a plurality of different objects detected by the object detection algorithm. The object detection algorithm may use at least one of the 2D data and the 3D data to identify objects and/or generate the pixel mask.

At 325 and 326, the process may comprise extracting depth data from the images. The depth data may be extracted from the 3D data associated with the images. The depth data for each detected object may be extracted. Extracting the depth data may comprise using the pixel mask to extract the depth data corresponding to each detected object. The depth data may be extracted from a 3D point cloud corresponding to the pixels associated with each detected object.

At step 327 and 328, the process may comprise computing a plane for each detected object. Computing a plane may comprise fitting a plane to the extracted 3D data. Computing a plane may comprise applying noise reduction, smoothing and/or thresholding techniques to account for outliers or inconsistencies in the data. Computing a plane may comprise generating a first set of planes associated with the first image and a second set of planes associated with the second image. Computing a plane may comprise determining a 3D location of at least one edge of the plane corresponding to each object. Computing a plane may comprise computing an orthogonal to each plane. Computing a plane may comprise computing plane features, such as, but not limited to at least one of the plane location, angle or orientation, size (e.g. area), and edge length(s).

At step 329, the process comprises identifying at least one set of corresponding planes. A set of corresponding planes may comprise two or more planes determined to be part of the same physical object based on characteristics of the planes. Corresponding planes may be identified by determining if planes satisfy at least one grouping criteria. The grouping criteria, in general, may evaluate characteristics of the planes to determine a likelihood that the planes belong to the same physical object. The grouping criteria may comprise a weighting algorithm applied to multiple features of the computed planes to determine the likelihood the planes belong to the same physical object. The likelihood may comprise determining if the characteristics of the planes satisfy a threshold. The grouping criteria may comprise determining whether planes share a common edge in the 3D data. The grouping criteria may comprise determining the extent to which planes share a common edge in the 3D data (e.g. to what extent are the edges of two planes substantially collinear). The grouping criteria may comprise determining whether orthogonals associated with each plane are not parallel to each other which may indicate that the planes could be of different sides of an object (e.g. such as a polygonal package). The grouping criteria may comprise determining whether orthogonals associated with each plane are perpendicular to each other which may indicate that the planes could be of different sides of an object (e.g. such as a rectangular package). The grouping criteria may comprise determining whether orthogonals associated with each plane are not perpendicular to each other which may indicate that the planes would not be associated with different sides of an object. In one aspect, identifying a set of corresponding planes may comprise identifying at least one plane in a first set of planes (e.g. derived from the first image) and at least one plane in a second set of planes (e.g. derived from the second image) that satisfy the grouping criteria.

In one aspect, the grouping criteria may be obtained from a database of established or previously defined criteria. In one aspect, the grouping criteria may comprise a trained model. The trained model may be dynamically updated, for example, using data associated with computed planes identified as corresponding to a same object which resulted in successful picks by a robotic picking unit. In one aspect, the grouping criteria may comprise user input indicating how the computed planes should be grouped. In one aspect, the grouping criteria may be changed over time, such as between picks, between layers of objects, and/or between changes in the pick area (e.g. from one pallet of objects to another). For example, based on known characteristics of objects in the picking area a first grouping criteria may be used for first objects/characteristics and a second grouping criteria used for second objects/characteristics. In one aspect, the grouping criteria may comprise a set of prototypes where each prototype is indicative of expected characteristics of planes for an object or object type. The set of prototypes may comprise a plurality of prototypes each associated with a different object or object type.

At step 330, the process may comprise providing pick instructions to a robotic picking unit based on the at least one set of corresponding planes. For example, once a set of corresponding planes has been identified as belonging to (or satisfying a likelihood threshold of belonging to) the same physical object, pick instructions may be generated and provided to the robotic picking unit. Pick instructions may comprise an indication of at least one of pick coordinates and object size/dimensions as determined from the planes. In one aspect, providing pick instructions comprises scoring and/or ranking each of the sets of corresponding planes according to a scoring and/or ranking algorithm to determine which object should be picked.

### Hardware Architecture

Generally, the techniques disclosed herein may be implemented on hardware or a combination of software and hardware. For example, they may be implemented in an operating system kernel, in a separate user process, in a library package bound into network applications, on a specially constructed machine, on an application-specific integrated circuit (ASIC), or on a network interface card.

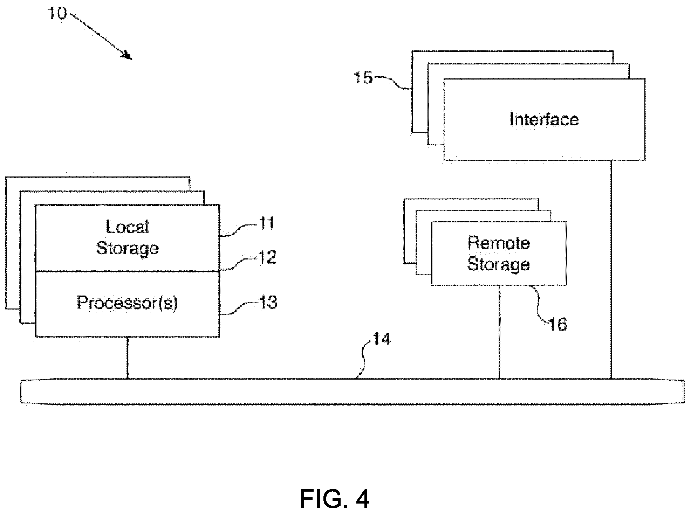

Software/hardware hybrid implementations of at least some of the embodiments disclosed herein may be implemented on a programmable network-resident machine (which should be understood to include intermittently connected network-aware machines) selectively activated or reconfigured by a computer program stored in memory. Such network devices may have multiple network interfaces that may be configured or designed to utilize different types of network communication protocols. A general architecture for some of these machines may be described herein in order to illustrate one or more exemplary means by which a given unit of functionality may be implemented. According to specific embodiments, at least some of the features or functionalities of the various embodiments disclosed herein may be implemented on one or more general-purpose computers associated with one or more networks, such as for example an end-user computer system, a client computer, a network server or other server system, a mobile computing device (e.g., tablet computing device, mobile phone, smartphone, laptop, or other appropriate computing device), a consumer electronic device, a music player, or any other suitable electronic device, router, switch, or other suitable device, or any combination thereof. In at least some embodiments, at least some of the features or functionalities of the various embodiments disclosed herein may be implemented in one or more virtualized computing environments (e.g., network computing clouds, virtual machines hosted on one or more physical computing machines, or other appropriate virtual environments). Any of the above mentioned systems, units, modules, engines, controllers, components or the like may be and/or comprise hardware and/or software as described herein. For example, the vision system 105 and subcomponents thereof may be and/or comprise computing hardware and/or software as described herein in association with FIGS. 4-7. Furthermore, any of the above mentioned systems, units, modules, engines, controllers, components, interfaces or the like may use and/or comprise an application programming interface (API) for communicating with other systems units, modules, engines, controllers, components, interfaces or the like for obtaining and/or providing data or information.

Referring now to **FIG. 4****,** there is shown a block diagram depicting an exemplary computing device **10** suitable for implementing at least a portion of the features or functionalities disclosed herein. Computing device **10** may be, for example, any one of the computing machines listed in the previous paragraph, or indeed any other electronic device capable of executing software- or hardware-based instructions according to one or more programs stored in memory. Computing device **10** may be configured to communicate with a plurality of other computing devices, such as clients or servers, over communications networks such as a wide area network a metropolitan area network, a local area network, a wireless network, the Internet, or any other network, using known protocols for such communication, whether wireless or wired.

In one aspect, computing device **10** includes one or more central processing units (CPU) **12,** one or more interfaces **15,** and one or more busses **14** (such as a peripheral component interconnect (PCI) bus). When acting under the control of appropriate software or firmware, CPU **12** may be responsible for implementing specific functions associated with the functions of a specifically configured computing device or machine. For example, in at least one aspect, a computing device **10** may be configured or designed to function as a server system utilizing CPU **12,** local memory **11** and/or remote memory **16,** and interface(s) **15.** In at least one aspect, CPU **12** may be caused to perform one or more of the different types of functions and/or operations under the control of software modules or components, which for example, may include an operating system and any appropriate applications software, drivers, and the like.

CPU **12** may include one or more processors **13** such as, for example, a processor from one of the Intel, ARM, Qualcomm, and AMD families of microprocessors. In some embodiments, processors **13** may include specially designed hardware such as application-specific integrated circuits (ASICs), electrically erasable programmable read-only memories (EEPROMs), field-programmable gate arrays (FPGAs), and so forth, for controlling operations of computing device **10.** In a particular aspect, a local memory **11** (such as non-volatile random-access memory (RAM) and/or read-only memory (ROM), including for example one or more levels of cached memory) may also form part of CPU **12.** However, there are many different ways in which memory may be coupled to system **10.** Memory **11** may be used for a variety of purposes such as, for example, caching and/or storing data, programming instructions, and the like. It should be further appreciated that CPU **12** may be one of a variety of system-on-a-chip (SOC) type hardware that may include additional hardware such as memory or graphics processing chips, such as a QUALCOMM SNAPDRAGON^{™} or SAMSUNG EXYNOS^{™} CPU as are becoming increasingly common in the art, such as for use in mobile devices or integrated devices.

As used herein, the term "processor" is not limited merely to those integrated circuits referred to in the art as a processor, a mobile processor, or a microprocessor, but broadly refers to a microcontroller, a microcomputer, a programmable logic controller, an application-specific integrated circuit, and any other programmable circuit.

In one aspect, interfaces **15** are provided as network interface cards (NICs). Generally, NICs control the sending and receiving of data packets over a computer network; other types of interfaces 15 may for example support other peripherals used with computing device 10. Among the interfaces that may be provided are Ethernet interfaces, frame relay interfaces, cable interfaces, DSL interfaces, token ring interfaces, graphics interfaces, and the like. In addition, various types of interfaces may be provided such as, for example, universal serial bus (USB), Serial, Ethernet, FIREWIRE^{™}, THUNDERBOLT^{™}, PCI, parallel, radio frequency (RF), BLUETOOTH^{™}, near-field communications (e.g., using near-field magnetics), 802.11 (WiFi), frame relay, TCP/IP, ISDN, fast Ethernet interfaces, Gigabit Ethernet interfaces, Serial ATA (SATA) or external SATA (ESATA) interfaces, high-definition multimedia interface (HDMI), digital visual interface (DVI), analog or digital audio interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces **15** may include physical ports appropriate for communication with appropriate media. In some cases, they may also include an independent processor (such as a dedicated audio or video processor, as is common in the art for high-fidelity A/V hardware interfaces) and, in some instances, volatile and/or non-volatile memory (e.g., RAM).

Although the system shown in **FIG. 4** illustrates one specific architecture for a computing device **10** for implementing one or more of the embodiments described herein, it is by no means the only device architecture on which at least a portion of the features and techniques described herein may be implemented. For example, architectures having one or any number of processors **13** may be used, and such processors **13** may be present in a single device or distributed among any number of devices. In one aspect, single processor **13** handles communications as well as routing computations, while in other embodiments a separate dedicated communications processor may be provided. In various embodiments, different types of features or functionalities may be implemented in a system according to the aspect that includes a client device (such as a tablet device or smartphone running client software) and server systems (such as a server system described in more detail below).

Regardless of network device configuration, the system of an aspect may employ one or more memories or memory modules (such as, for example, remote memory block **16** and local memory **11**) configured to store data, program instructions for the general-purpose network operations, or other information relating to the functionality of the embodiments described herein (or any combinations of the above). Program instructions may control execution of or comprise an operating system and/or one or more applications, for example. Memory **16** or memories **11, 16** may also be configured to store data structures, configuration data, encryption data, historical system operations information, or any other specific or generic non-program information described herein.

Because such information and program instructions may be employed to implement one or more systems or methods described herein, at least some network device embodiments may include nontransitory machine-readable storage media, which, for example, may be configured or designed to store program instructions, state information, and the like for performing various operations described herein. Examples of such nontransitory machine- readable storage media include, but are not limited to, magnetic media such as hard disks, floppy disks, and magnetic tape; optical media such as CD-ROM disks; magneto-optical media such as optical disks, and hardware devices that are specially configured to store and perform program instructions, such as read-only memory devices (ROM), flash memory (as is common in mobile devices and integrated systems), solid state drives (SSD) and "hybrid SSD" storage drives that may combine physical components of solid state and hard disk drives in a single hardware device (as are becoming increasingly common in the art with regard to personal computers), memristor memory, random access memory (RAM), and the like. It should be appreciated that such storage means may be integral and non-removable (such as RAM hardware modules that may be soldered onto a motherboard or otherwise integrated into an electronic device), or they may be removable such as swappable flash memory modules (such as "thumb drives" or other removable media designed for rapidly exchanging physical storage devices), "hot-swappable" hard disk drives or solid state drives, removable optical storage discs, or other such removable media, and that such integral and removable storage media may be utilized interchangeably. Examples of program instructions include both object code, such as may be produced by a compiler, machine code, such as may be produced by an assembler or a linker, byte code, such as may be generated by for example a JAVA^{™} compiler and may be executed using a Java virtual machine or equivalent, or files containing higher level code that may be executed by the computer using an interpreter (for example, scripts written in Python, Perl, Ruby, Groovy, or any other scripting language).

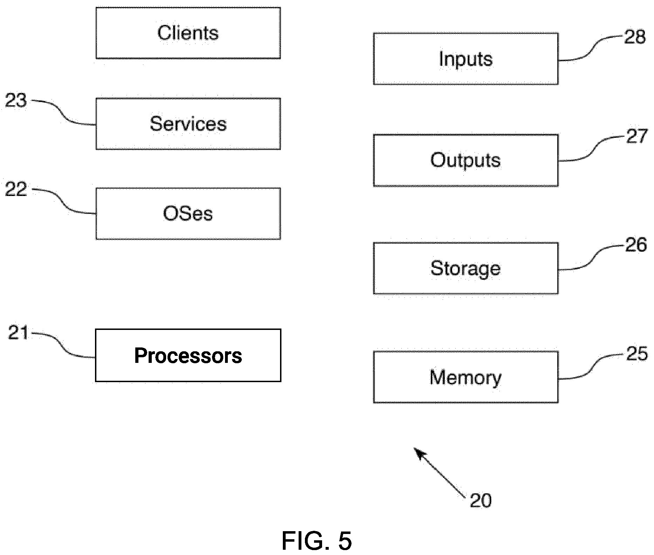

In some embodiments, systems may be implemented on a standalone computing system. Referring now to **FIG. 5****,** there is shown a block diagram depicting a typical exemplary architecture of one or more embodiments or components thereof on a standalone computing system. Computing device **20** includes processors **21** that may run software that carry out one or more functions or applications of embodiments, such as for example a client application. Processors **21** may carry out computing instructions under control of an operating system **22** such as, for example, a version of MICROSOFT WINDOWS^{™} operating system, APPLE macOS^{™} or iOS^{™} operating systems, some variety of the Linux operating system, ANDROID^{™} operating system, or the like. In many cases, one or more shared services **23** may be operable in system **20,** and may be useful for providing common services to client applications. Services **23** may for example be WINDOWS^{™} services, user-space common services in a Linux environment, or any other type of common service architecture used with operating system **22.** Input devices **28** may be of any type suitable for receiving user input, including for example a keyboard, touchscreen, microphone (for example, for voice input), mouse, touchpad, trackball, or any combination thereof. Output devices **27** may be of any type suitable for providing output to one or more users, whether remote or local to system **20,** and may include for example one or more screens for visual output, speakers, printers, or any combination thereof. Memory **25** may be random-access memory having any structure and architecture known in the art, for use by processors **21,** for example to run software. Storage devices **26** may be any magnetic, optical, mechanical, memristor, or electrical storage device for storage of data in digital form (such as those described above, referring to **FIG. 4**). Examples of storage devices **26** include flash memory, magnetic hard drive, CD-ROM, and/or the like.

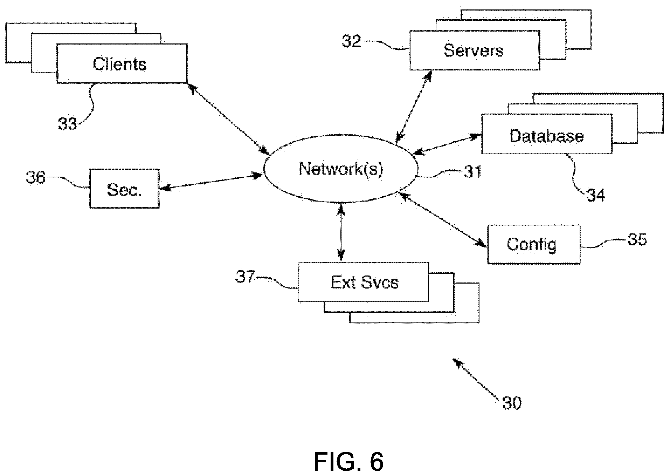

In some embodiments, systems may be implemented on a distributed computing network, such as one having any number of clients and/or servers. Referring now to **FIG. 6****,** there is shown a block diagram depicting an exemplary architecture **30** for implementing at least a portion of a system according to one aspect on a distributed computing network. According to the aspect, any number of clients **33** may be provided. Each client **33** may run software for implementing client-side portions of a system; clients may comprise a system **20** such as that illustrated in **FIG. 5****.** In addition, any number of servers **32** may be provided for handling requests received from one or more clients **33.** Clients **33** and servers **32** may communicate with one another via one or more electronic networks **31,** which may be in various embodiments any of the Internet, a wide area network, a mobile telephony network (such as CDMA or GSM cellular networks), a wireless network (such as WiFi, WiMAX, LTE, and so forth), or a local area network (or indeed any network topology known in the art; the aspect does not prefer any one network topology over any other). Networks **31** may be implemented using any known network protocols, including for example wired and/or wireless protocols.

In addition, in some embodiments, servers **32** may call external services **37** when needed to obtain additional information, or to refer to additional data concerning a particular call. Communications with external services **37** may take place, for example, via one or more networks **31.** In various embodiments, external services **37** may comprise web-enabled services or functionality related to or installed on the hardware device itself. For example, in one aspect where client applications are implemented on a smartphone or other electronic device, client applications may obtain information stored in a server system **32** in the cloud or on an external service **37** deployed on one or more of a particular enterprise's or user's premises.

In some embodiments, clients **33** or servers **32** (or both) may make use of one or more specialized services or appliances that may be deployed locally or remotely across one or more networks **31.** For example, one or more databases **34** may be used or referred to by one or more embodiments. It should be understood by one having ordinary skill in the art that databases **34** may be arranged in a wide variety of architectures and using a wide variety of data access and manipulation means. For example, in various embodiments one or more databases **34** may comprise a relational database system using a structured query language (SQL), while others may comprise an alternative data storage technology such as those referred to in the art as "NoSQL" (for example, HADOOP CASSANDRA^{™}, GOOGLE BIGTABLE^{™}, and so forth). In some embodiments, variant database architectures such as column-oriented databases, in-memory databases, clustered databases, distributed databases, or even flat file data repositories may be used according to the aspect. It will be appreciated by one having ordinary skill in the art that any combination of known or future database technologies may be used as appropriate, unless a specific database technology or a specific arrangement of components is specified for a particular aspect described herein. Moreover, it should be appreciated that the term "database" as used herein may refer to a physical database machine, a cluster of machines acting as a single database system, or a logical database within an overall database management system. Unless a specific meaning is specified for a given use of the term "database", it should be construed to mean any of these senses of the word, all of which are understood as a plain meaning of the term "database" by those having ordinary skill in the art.

Similarly, some embodiments may make use of one or more security systems **36** and configuration systems **35.** Security and configuration management are common information technology (IT) and web functions, and some amount of each are generally associated with any IT or web systems. It should be understood by one having ordinary skill in the art that any configuration or security subsystems known in the art now or in the future may be used in conjunction with embodiments without limitation, unless a specific security **36** or configuration system **35** or approach is specifically required by the description of any specific aspect.

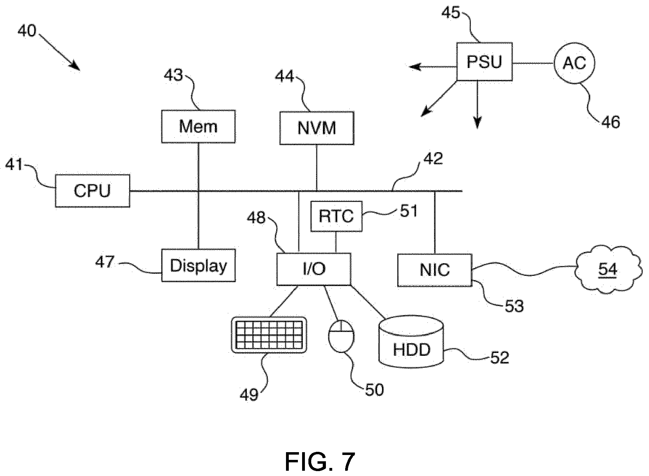

**FIG. 7** shows an exemplary overview of a computer system **40** as may be used in any of the various locations throughout the system. It is exemplary of any computer that may execute code to process data. Various modifications and changes may be made to computer system **40** without departing from the broader scope of the system and method disclosed herein. Central processor unit (CPU) **41** is connected to bus **42,** to which bus is also connected memory **43,** nonvolatile memory **44,** display **47,** input/output (I/O) unit **48,** and network interface card (NIC) **53.** I/O unit **48** may, typically, be connected to keyboard **49,** pointing device **50,** hard disk **52,** and real-time clock **51.** NIC **53** connects to network **54,** which may be the Internet or a local network, which local network may or may not have connections to the Internet. Also shown as part of system **40** is power supply unit **45** connected, in this example, to a main alternating current (AC) supply **46.** Not shown are batteries that could be present, and many other devices and modifications that are well known but are not applicable to the specific novel functions of the current system and method disclosed herein. It should be appreciated that some or all components illustrated may be combined, such as in various integrated applications, for example Qualcomm or Samsung system-on-a-chip (SOC) devices, or whenever it may be appropriate to combine multiple capabilities or functions into a single hardware device (for instance, in mobile devices such as smartphones, video game consoles, in-vehicle computer systems such as navigation or multimedia systems in automobiles, or other integrated hardware devices).

In various embodiments, functionality for implementing systems or methods of various embodiments may be distributed among any number of client and/or server components. For example, various software modules may be implemented for performing various functions in connection with the system of any particular aspect, and such modules may be variously implemented to run on server and/or client components.

The skilled person will be aware of a range of possible modifications of the various embodiments described above. Accordingly, the present invention is defined by the claims and their equivalents.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false ( or not present) and Bis true ( or present), and both A and B are true ( or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and/or a process associated with the disclosed principles herein. Thus, while particular embodiments and applications have been illustrated and described, it is to be understood that the disclosed embodiments are not limited to the precise construction and components disclosed herein. Various apparent modifications, changes and variations may be made in the arrangement, operation and details of the method and apparatus disclosed herein without departing from the spirit and scope defined in the appended claims.

## Claims

1. A computer implemented method for improving computer vision based object identification for automated robotic picking operations, the computer implemented method comprising:
obtaining a first image of a pick area from a first camera, the pick area associated with a robotic picking unit, the first camera capturing the first image from a first perspective, the first image comprising two dimensional (2D) data and three dimensional (3D) data;
obtaining a second image of the pick area from a second camera, the second camera capturing the second image from a second perspective, wherein the second perspective is different than the first perspective, the second image comprising 2D data and 3D data;
processing the first image by executing an object detection algorithm on the first image to generate a first pixel mask, the first pixel mask indicating a plurality of detected objects in the first image;
processing the second image by executing an object detection algorithm on the second image to generate a second pixel mask, the second pixel mask indicating a plurality of detected objects in the second image;
extracting depth data from the 3D data associated with the first image for each detected object associated with the first pixel mask;
extracting depth data from the 3D data associated with the second image for each detected object associated with the second pixel mask;
computing a plane for each of the plurality of detected objects using the extracted 3D data;
identifying at least one set of corresponding planes, the corresponding planes comprising planes satisfying a grouping criteria, the grouping criteria configured to group planes belonging to the same physical object; and
providing pick instructions to the robotic picking unit based on the at least one set of corresponding planes.

2. The computer implemented method according to claim 1, wherein the first camera is positioned such that the first image comprises a top-down view of the pick objects within the pick area and the second camera is positioned such that the second image comprises a side view of the pick objects within the pick area.

3. The computer implemented method according to claim 1, wherein computing a plane comprises fitting a plane to the depth data associated with each detected object.

4. The computer implemented method according to claim 1, wherein computing a plane comprises determining a location of at least one edge of the plane in the 3D data.

5. The computer implemented method according to claim 1, wherein the grouping criteria comprise planes which share a common edge in the 3D data.

6. The computer implemented method according to claim 1, wherein computing each plane further comprises computing an orthogonal to the plane.

7. The computer implemented method according to claim 1, wherein the grouping criteria comprise identifying planes having orthogonals which are perpendicular to each other.

8. The computer implemented method according to claim 1, wherein the grouping criteria are obtained from a database of previously defined criteria.

9. The computer implemented method according to claim 1, wherein the grouping criteria comprise a trained model and wherein the grouping criteria dynamically change over time as the trained model is updated.

10. The computer implemented method according to claim 1, wherein the grouping criteria comprise input from a user indicating how the planes should be grouped.

11. The computer implemented method according to claim 1, wherein the grouping criteria comprise a first grouping criteria and second grouping criteria and wherein the grouping criteria can be changed between the first grouping criteria and the second grouping criteria depending on characteristics of the objects in the pick area.

12. The computer implemented method according to claim 1, wherein the grouping criteria comprise a set of prototypes, each prototype indicative of expected characteristics of planes for an object, the set of prototypes comprising a plurality of prototypes associated with different objects.

13. The computer implemented method according to claim 1, wherein computing a plane comprises computing a first set of planes associated with the first image data and a second set of planes associated with the second image data.

14. The computer implemented method according to claim 15, wherein identifying comprises identifying at least one plane in the first set and at least one plane in the second set that satisfy the grouping criteria.

15. A computing system for improving computer vision based object identification for automated robotic picking operations, the computing system comprising:
at least one computing processor; and
memory comprising instructions that, when executed by the at least one computing processor, enable the computing system to:
obtain a first image of a pick area from a first camera, the pick area associated with a robotic picking unit, the first camera capturing the first image from a first perspective, the first image comprising two dimensional (2D) data and three dimensional (3D) data;
obtain a second image of the pick area from a second camera, the second camera capturing the second image from a second perspective, wherein the second perspective is different than the first perspective, the second image comprising 2D data and 3D data;
process the first image by executing an object detection algorithm on the first image to generate a first pixel mask, the first pixel mask indicating a plurality of detected objects in the first image;
process the second image by executing an object detection algorithm on the second image to generate a second pixel mask, the second pixel mask indicating a plurality of detected objects in the second image;
extract depth data from the 3D data associated with the first image for each detected object associated with the first pixel mask;
extract depth data from the 3D data associated with the second image for each detected object associated with the second pixel mask;
compute a plane for each of the plurality of detected objects using the extracted 3D data;
identify at least one set of corresponding planes, the corresponding planes comprising planes satisfying a grouping criteria, the grouping criteria configured to group planes belonging to the same physical object; and
provide pick instructions to the robotic picking unit based on the at least one set of corresponding planes.

16. A non-transitory computer readable medium comprising instructions that when executed by a processor enable the processor to:
obtain a first image of a pick area from a first camera, the pick area associated with a robotic picking unit, the first camera capturing the first image from a first perspective, the first image comprising two dimensional (2D) data and three dimensional (3D) data;
obtain a second image of the pick area from a second camera, the second camera capturing the second image from a second perspective, wherein the second perspective is different than the first perspective, the second image comprising 2D data and 3D data;
process the first image by executing an object detection algorithm on the first image to generate a first pixel mask, the first pixel mask indicating a plurality of detected objects in the first image;
process the second image by executing an object detection algorithm on the second image to generate a second pixel mask, the second pixel mask indicating a plurality of detected objects in the second image;
extract depth data from the 3D data associated with the first image for each detected object associated with the first pixel mask;
extract depth data from the 3D data associated with the second image for each detected object associated with the second pixel mask;
compute a plane for each of the plurality of detected objects using the extracted 3D data;
identify at least one set of corresponding planes, the corresponding planes comprising planes satisfying a grouping criteria, the grouping criteria configured to group planes belonging to the same physical object; and
provide pick instructions to the robotic picking unit based on the at least one set of corresponding planes.
